# EUROPÄISCHE PATENTSCHRIFT

(11) **EP 1 534 535 B1**
(45) Veröffentlichungstag und Bekanntmachung des Hinweises auf die Patenterteilung: **09.06.2010**
(21) Anmeldenummer: 03793720.8
(22) Anmeldetag: 11.08.2003
(51) Int. Cl.: B42D 15/00

(54) **DATENTRÄGER MIT EINER OPTISCH VARIABLEN STRUKTUR**
DATA CARRIER COMPRISING AN OPTICALLY VARIABLE ELEMENT
SUPPORT DE DONNEES ELEMENT OPTIQUEMENT VARIABLE

(30) Priorität: 13.08.2002 DE 10237642; 20.09.2002 DE 10243863
(43) Veröffentlichungstag der Anmeldung: 01.06.2005
(73) Patentinhaber: Giesecke & Devrient GmbH, 81677 München (DE)
(72) Erfinder: ADAMCZYCK, Roger, 84424 Isen (DE); FRANZ, Peter, 85567 Bruck (DE)
(74) Vertreter: Höhfeld, Jochen
(86) Internationale Anmeldenummer: PCT/EP2003/008891
(87) Internationale Veröffentlichungsnummer: WO 2004/022355

(56) Entgegenhaltungen:
- EP-A- 0 372 274
- EP-A- 0 440 045
- WO-A-02/20280
- WO-A-97/17211
- WO-A-98/53999
- US-A- 5 582 103
- US-A- 5 722 693

## Beschreibung

Die Erfindung betrifft einen Datenhäger mit einer optisch variablen Struktur, die eine Prägestruktur mit erhabenen Bereichen und eine zur Oberfläche des Datenträgers kontrastierende erste Beschichtung, die nur bereichsweise vorgesehen ist, aufweist, wobei die Prägestruktur und die Beschichtung so kombiniert sind, dass wenigstens Teile der Beschichtung bei senkrechter Betrachtung vollständig sichtbar sind, bei Schrägbetrachtung aber verdeckt werden, so dass bei abwechselnd senkrechter und schräger Betrachtung ein Kippeffekt entsteht, und wobei die optisch variable Struktur zumindest in Teilbereichen eine zweite Beschichtung aufweist, die zumindest in Teilbereichen überlappend zur ersten Beschichtung angeordnet ist. Die Erfindung betrifft ferner ein Verfahren zur Herstellung eines derartigen Datenträgers. ten, Wertpapiere, Kredit- oder Ausweiskarten mit optisch variablen Sicherheitselementen, insbesondere mit optisch variablen Beugungsstrukturen, wie Hologrammen auszustatten. Der Fälschungsschutz der Hologramme beruht auf dem unterschiedlichen optischen Eindruck dieser Hologramme, der bei Änderung des Betrachtungswinkels relativ zu diesem Hologramm auftritt. Dieser optisch variable Eindruck kann von Kopiergeräten nicht wiedergegeben werden, da Kopiergeräte lediglich das Erscheinungsbild des Hologramms unter einem ganz bestimmten Betrachtungswinkel wiedergeben. Ein Datenträger mit einem derartigen Hologramm ist beispielsweise aus der EP 0 440 045 A2 bekannt. In dieser Schrift wird vorgeschlagen, das Hologramm als vorgefertigtes Element oder auch als Prägung in eine auf den Datenträger aufgebrachte Lackschicht auf dem Datenträger aufzubringen.

Es gibt jedoch auch andere optisch variable Sicherheitselemente, die auf einem Datenträger vorgesehen werden können. So ist es beispielsweise aus der CA 1019 012 bekannt, eine Banknote in einem Teilbereich ihrer Oberfläche mit einem parallelen Liniendruckmuster zu versehen. Zur Erzeugung des optisch variablen Effekts wird in den Datenträger im Bereich des gedruckten Linienmusters zusätzlich eine Linienstruktur eingeprägt, so dass Flanken entstehen, die jeweils nur unter bestimmten Betrachtungswinkeln sichtbar sind. Durch gezielte Anordnung des gedruckten Linienmusters auf den Flanken gleicher Orientierung der geprägten Linienstruktur wird bei schräger Betrachtung der mit den Linien versehenen Flanken das Linienmuster sichtbar. Bei schräger Betrachtung der rückseitigen Flanken ist das Linienmuster nicht erkennbar.

Der Fälschungsschutzeffekt derartiger geprägter optisch variabler Sicherheitselemente kann noch verbessert werden, wenn durch gezielte Veränderung des Linienmusters oder der Prägestruktur zusätzliche visuell erkennbare Effekte erzeugt werden. Beispiele für derartige Zusatzeffekte werden in der WO 97/17211 sowie der WO 02/ 20280 beschrieben.

Der optisch variable Effekt dieser letztgenannten bekannten Sicherheitselemente entsteht grundsätzlich durch die Kombination eines Aufdrucks mit einer Blindprägung, die vorzugsweise im Stichtiefdruck erzeugt wird. Die Blindprägung hat dabei den Nachteil, dass sie nicht in ein farbiges Stichtiefdruckbild integriert werden kann, sondern nur als isoliertes Sicherheitsmerkmal nutzbar ist. Denn beim Einfärben der Stichtiefdruckplatte kann nur bei einem größeren Abstand zwischen den blind prägenden und den farbführenden Bereichen gewährleistet werden, dass tatsächlich keine Farbe in die blind prägenden Vertiefungen gelangt.

Aus der EP 0 372 274 A2 ist eine Ausweiskarte mit einer ersten, inneren und einer zweiten, äußeren Farbschicht bekannt, wobei durch geeignete Wahl der Materialien der beiden Schichten durch Einwirkung eines Lasers die zweite Farbschicht thermisch abgebaut und dadurch die erste Schicht in Partikeln weggesprengt wird.

Der Erfindung liegt daher die Aufgabe zugrunde, einen Datenträger mit einem optisch variablen Sicherheitselement der eingangs genannten Art vorzuschlagen, das in ein Druckbild integriert werden kann.

Die Aufgabe wird durch die Merkmale der unabhängigen Ansprüche gelöst. Weiterbildungen sind Gegenstand der Unteransprüche.

Die Erfindung beruht auf der Erkenntnis, dass der optisch variable Effekt des Sicherheitselements erhalten bleibt, wenn statt der Blindprägung eine farbführende Prägung verwendet wird. D.h., die optisch variable Struktur weist zumindest in Teilbereichen eine zweite ebenfalls zur Datenträgeroberfläche kontrastierende Beschichtung auf, die deckungsgleich zu den erhabenen Bereichen der Prägestruktur angeordnet ist. Die zweite Beschichtung bietet den Vorteil, dass die Prägestruktur ohne zusätzlichen Druckvorgang stabilisiert wird.

Zudem hat das erfindungsgemäße Sicherheitselement den Vorteil, dass es in ein Stichtiefdruckmotiv und damit in die farbliche und gegenständliche Ausgestaltung des Hauptmotivs integriert werden kann.

Der Stichtiefdruck zeichnet sich dadurch aus, dass in die Druckplatten linienförmige Vertiefungen eingebracht werden, um ein Druckbild zu erzeugen. Auch flächige Darstellungen werden hierbei durch eng nebeneinander liegende Gravurlinien erzeugt, wobei die einzelnen Gravurlinien in der Regel Bruchteile eines Millimeters breit sind.

Für den Druckvorgang werden die Gravurlinien der Druckplatte mit Farbe gefüllt. Die überschüssige Farbe wird mithilfe eines Wischzylinders oder eines Rakels so von der Druckplatte entfernt, dass die Gravurlinien bis zum Rand mit Farbe gefüllt sind. Beim Druckvorgang wird schließlich mittels eines Andruckzylinders, der eine elastische Oberfläche aufweist, der zu bedruckende Datenträger, im Regelfall Papier, mit hohem Druck auf die Druckplatte gepresst. Der Datenträger wird dabei in die mit Farbe gefüllten Gravurlinien der Druckplatte eingedrückt und kommt so mit der Druckfarbe in Berührung. Beim Ablösen des Datenträgers zieht dieser die Druckfarbe aus den Vertiefungen der Gravurlinien heraus. Das so erzeugte Druckbild weist Drucklinien auf, die je nach Tiefe der Gravur in der Farbschichtdicke variieren. Der Datenträger wird hierbei derart stark in die Vertiefungen der Druckplatte gepresst, dass er nicht nur die Farbe aus den Vertiefungen aufnimmt, sondern auch gleichzeitig geprägt wird.

Verwendet man im Stichtiefdruck lasierende Druckfarben, so erhält man beim Bedrucken eines weißen Datenträgers mit geringen Farbschichten helle Farbtöne, beim Bedrucken mit dicken Farbschichten dunklere Farbtöne. Dieser Effekt kann auch im Rahmen der Erfindung genutzt werden, um unterschiedliche Farbeindrücke zu erzeugen und den Kontrast des Kippeffekts zu erhöhen. Ebenso ist es möglich, nicht lasierende und lasierende Druckfarben zu kombinieren.

Die erfindungsgemäße optisch variable Struktur kann daher auf sehr einfache Weise in die Druckplatte eines Stichtiefdruckmotivs integriert werden, indem die Prägestruktur ebenfalls als Vertiefungen in der Druckplatte vorgesehen wird. Beim Druckvorgang werden die zur Prägestruktur gehörenden Vertiefungen mit einer Druckfarbe gefüllt, die beispielsweise die gleiche Farbe aufweist wie das zu druckende Stichtiefdruckmotiv. Diese Farbschicht, die mit dem Prägevorgang auf den Datenträger übertragen wird, bildet die erfindungsgemäße zweite Beschichtung, die deckungsgleich zu den erhabenen Bereichen der Prägestruktur angeordnet ist.

Dabei muss nicht die gesamte Prägestruktur mit dieser Farbe eingefärbt werden. Es können auch nur Teilbereiche der Prägestruktur mit einer Farbe versehen werden. Alternativ ist es auch möglich, die Prägestruktur mit unterschiedlichen Farben oder einem Farbverlauf zu versehen. Ein derartiger Farbverlauf kann über einen Farbschnitt hergestellt werden, bei dem die Druckplatte mittels Einzelfarbschablonen entsprechend eingefärbt ist. Vorzugsweise wird die Farbe der zweiten Beschichtung in die farbliche Gestaltung des Stichtiefdrucksmotivs einbezogen.

Der Farbschnitt sowie eine entsprechende Wahl der verwendeten Druckfarben werden hierbei gezielt zur Kontraststeuerung der optisch variablen Struktur eingesetzt.

Mithilfe des Farbschnitts können auch Teile der optisch variablen Struktur maschinenlesbar ausgestaltet werden, indem wenigstens einer der Druckfarben wenigstens ein Merkmalstoff, wie ein Lumineszenzstoff, ein Magnetstoff oder ein elektrisch leitfähiger Stoff zugesetzt wird. Unterschiedliche Teile der optisch variablen Struktur können auch mit unterschiedlichen Merkmalstoffen versehen werden. Alternativ kann die gesamte optisch variable Struktur auch mit einer einheitlichen maschinenlesbaren Eigenschaft ausgestattet werden.

Die optisch variable Struktur kann dabei direkt an das Stichtiefdruckmotiv anschließen oder aber auch Teil des Stichtiefdruckmotivs sein.

Da derartige Stichtiefdruckmotive in erster Linie im Wertpapierdruck Anwendung finden, handelt es sich bei dem erfindungsgemäßen Datenträger vorzugsweise um ein Wertpapier, insbesondere eine Banknote. Das Wertpapier kann ein Sicherheitspapier aus Baumwollfasern, ein synthesefaserhaltiges und/oder zellstoffhaltiges Papier, aber auch aus reinen Kunststofffolien sein. Ein derartiges Wertpapier kann auch vorteilhaft zur Absicherung beliebiger Produkte und Waren verwendet werden.

Die im Bereich der Prägestruktur angeordnete zweite Beschichtung kann zudem eine zur ersten Beschichtung kontrastierende Farbe aufweisen und zumindest teilweise überlappend zur ersten Beschichtung angeordnet sein. Ferner kann eine der Beschichtungen zumindest bereichsweise maschinell lesbare Eigenschaften aufweisen. Hierbei kann es sich beispielsweise um magnetische, elektrisch leitfähige oder lumineszierende Eigenschaften handeln. Schließlich kann der Datenträger im Bereich der optisch variablen Struktur eine metallische Untergrundschicht aufweisen.

Die Prägestruktur ist dabei vorzugsweise als Rasterstruktur ausgeführt. Sie kann dreieckförmig, aber auch trapezförmig, sinusförmig, halbkreisförmig oder anderer Gestalt sein. Vorzugsweise ist die Prägestruktur als Linienraster mit konstanter Rasterweite ausgeführt. In manchen Ausführungsformen kann es jedoch auch sinnvoll sein, unterschiedliche Rasterweiten zu verwenden. So kann die Rasterweite beispielsweise im Randbereich der optisch variablen Struktur kontinuierlich zunehmen, so dass die Prägestruktur quasi ausläuft. Der gleiche Effekt kann durch eine kontinuierliche Verringerung der Linienbreite bei gleich bleibender oder zunehmender Rasterweite erreicht werden. Die erste Beschichtung kann in diesem Randbereich entsprechend der Prägestruktur angepasst sein oder auch vollständig fehlen.

Weitere Effekte lassen sich erreichen, wenn die Flankenwinkel innerhalb einer Linie der als Linienraster ausgeführten Prägestruktur variieren.

Um die optisch variablen Effekte besser zur Geltung zu bringen, kann die Prägestruktur in Teilbereiche unterteilt sein, in denen unterschiedliche Teilprägestrukturen vorgesehen sind, wie es in der WO 02/20280 beschrieben wird.

Die Teilbereiche bilden hierbei vorzugsweise eine zweidimensionale Matrix, die in horizontaler Richtung m Teilbereiche und in vertikaler Richtung n Teilbereiche aufweist mit m, n ≥ 1, vorzugsweise m, n ≥ 2. Die Teilprägestrukturen in wenigstens zwei aneinander grenzenden Teilbereichen werden dabei um einen Bruchteil, insbesondere ein Drittel der Rasterweite versetzt zueinander angeordnet.

Die erste Beschichtung ist vorzugsweise ein Aufdruck, der ebenfalls als Rasterstruktur ausgebildet ist, wobei die einzelnen Rasterelemente beliebig gestaltet sein können. Vorzugsweise wird jedoch ein Linienraster mit konstanter Rasterweite verwendet. Gemäß einer bevorzugten Ausführungsform besteht dieses Linienraster aus gedruckten Linien beliebiger Farbgestaltung. Der Aufdruck erfolgt dabei mit einem beliebigen Druckverfahren, wie Offset- oder Siebdruck. Auch beliebige indirekte Druckverfahren, wie indirekter Hochdruck, können Anwendung finden. Die Verfahren ermöglichen es zudem, die erste Beschichtung mit einem Farbverlauf, einen so genannten "Irisdruck", zu versehen.

Druckraster und Prägestruktur sind aufeinander abgestimmt, vorzugsweise so, dass die Breite der Druckrasterlinien etwas geringer ist als die Länge der Flanken der Prägestrukturlinien und dass sie parallel oder weit gehend parallel verlaufen. Druckraster und Prägestruktur müssen dabei nicht zwingend geradlinig verlaufen, sie können vielmehr auch in Form von Wellenlinien ausgebildet sein. Die Linienbreiten liegen dabei zwischen 25 µm und 300 µm, vorzugsweise zwischen 55 µm und 150 µm. Setzt sich das Linienraster ausgedruckten, voneinander beabstandeten Linien zusammen, so wird für das Verhältnis bedruckter / unbedruckter Bereich vorzugsweise ein Verhältnis von ca.1:1 gewählt. Wird hierbei zusätzlich eine Linienbreite in der Größenordnung von ca. 100 µm gewählt, so können die Linien vom Auge praktisch nicht mehr aufgelöst werden und es entsteht ein homogener Farbeindruck. D.h., das Linienraster wird visuell lediglich als homogene farbige Fläche wahrgenommen. Zusätzlich können die Linien in bestimmten Bereichen verdickt ausgeführt sein und auf diese Weise beispielsweise ein Halbtonbild oder ein anderes Motiv darstellen. Vorzugsweise weisen die Linien lediglich auf einer Seite Verdickungen auf. Dies führt ebenfalls zu einem stärkeren Kontrast. Alternativ können die Linien auch Aussparungen aufweisen, um so ein zusätzliches visuell erkennbares Muster zu erzeugen. Die erste Beschichtung und/oder die Prägestruktur kann auch so ausgeführt werden, dass sie inhaltlich andere auf dem Wertdokument vorhandene Informationen wiederholt, um einen Vergleich zu ermöglichen.

Generell ist festzuhalten, dass die Farbgestaltung des Sicherheitselements beliebig durch entsprechende Farbwahl von erster und zweiter Beschichtung eingestellt werden kann, da zumindest in Aufsicht immer die Mischung der beiden Farben wahrgenommen wird. Ebenso können die unter verschiedenen Betrachtungswinkeln wahrnehmbaren Informationen durch entsprechende Wahl der Parameter, wie Farbe, Linienstärke und Linienmodulation der ersten Beschichtung und Flankenwinkel, Flankenhöhe sowie Flankenmodulation der Prägestruktur eingestellt werden.

Auf eine Rasterung des Aufdrucks kann verzichtet werden, wenn optisch variable Farben Verwendung finden, d.h. Farben, die vom Blickwinkel abhängig unterschiedliche optische Effekte aufweisen. Dies können hoch glänzende, z.B. metallische Schichten oder auch Farben sein, die den Farbeindruck selbst winkelabhängig verändern, wie dies beispielsweise bei Flüssigkristallpignentfarben der Fall ist.

Aber auch eine erfindungsgemäße optisch variable Struktur mit einer gerasterten ersten Beschichtung kann zusätzlich mit einem optisch variablen Druckbild unterlegt oder überdeckt sein. Hierbei handelt es sich vorzugsweise um Druckfarben mit Interferenzschicht- und/oder Flüssigkristallpigmenten. Auch ein zusätzlicher metallischer Untergrund ist denkbar. Das Druckbild kann positiv oder negativ ausgeführt werden. Bei der Verwendung von Flüssigkristallen ergibt sich zusätzlich ein erhöhter Fälschungsschutz, da das Druckbild in diesem Fall lichtpolarisierende Eigenschaften aufweist, die maschinell gelesen werden können. Dies gilt insbesondere dann, wenn das Druckbild aus Teildruckbildern zusammengesetzt ist, wobei für die Teildruckbilder Flüssigkristalle mit unterschiedlichen Polarisationseigenschaften verwendet werden.

Die erfindungsgemäße optisch variable Struktur kann statt mit einem zusätzlichen Druckbild auch mit einem Folienelement, wie einer in eine Lackschicht eingeprägten Beugungsstruktur, unterlegt oder überdeckt sein. Hier kommen beliebige Schichtaufbauten und Arten von Folienelementen infrage, wie echte Hologramme, Gitterstrukturen, Volumenhologramme, die entweder transparent, teiltransparent oder opak ausgeführt sind.

Gemäß einer bevorzugten Ausführungsform besteht die erfindungsgemäße optisch variable Struktur aus einem Aufdruck in Form eines gedruckten Linienrasters, einer ersten Farbe und einer diesem Linienraster überlagerten, ebenfalls linienförmig ausgeführten Prägestruktur, deren erhabene Bereiche mit einer weiteren zur ersten Farbe kontrastierenden Farbe versehen sind. Diese zweite Farbe wird erfindungsgemäß mittels lasierender Druckfarben erzeugt, die eine gewisse Transparenz aufweisen, so dass die Farbe der ersten Beschichtung durch diese Farbe hindurchscheint und damit der Betrachter in den Überlagerungsbereichen eine Mischfarbe wahrnimmt. Besonders gute Effekte werden hierbei erzielt, wenn zwischen der ersten und der zweiten Farbe ein Komplementärkontrast besteht.

Bei Betrachtung dieser optisch variablen Struktur senkrecht zur Datenträgeroberfläche erkennt der Betrachter idealerweise lediglich einen einheitlichen Farbeindruck. Beim Kippen des Datenträgers bzw. bei Änderung des Betrachtungswinkels werden Teile der ersten und/oder zweiten Beschichtung durch die Prägestruktur verdeckt, so dass bereichsweise der Farbeindruck der ersten oder zweiten Beschichtung bzw. der Mischfarbe der beiden Beschichtungen vorherrscht und somit variable Farbeffekte entstehen.

Dieses Farbwechselspiel tritt umso besser in Erscheinung, je kontrastreicher die Farben der beiden Beschichtungen sind. So kann beispielsweise ein dunkles, z.B. schwarzes Linienraster mit einem kontrastreichen farbigen Stichtiefdruckaufdruck mit lasierenden Farben, wie z.B. gelben oder anderen hellen Farbtönen kombiniert werden. Die erste Beschichtung in Form eines schwarzen Linienrasters wird dabei vorzugsweise im Offsetverfahren aufgedruckt.

Alternativ kann unter der ersten vorzugsweise rasterförmig ausgestalteten Beschichtung eine weitere vorzugsweise vollflächige Farbschicht angeordnet sein. Diese Schicht dient zur Stabilisierung des Papiers im Bereich des Sichereitselements und ermöglicht schärfere Ränder im Bereich der Prägestruktur. Diese Schicht kann als Primer oder farbige Lackschicht ausgeführt sein oder aber zusätzlich zur farblichen Gestaltung des Sicherheitselements beitragen, wenn sie eine zur ersten Beschichtung kontrastierende Farbe aufweist. Es können konventionelle Druckfarben oder auch Effektfarben, wie lumineszierende Farben, Interferenz- oder Flüssigkristallpigmente enthaltende Druckfarben, verwendet werden.

Schließlich können auch Zusatzinformationen durch entsprechende Gestaltung der Prägestruktur und/oder der ersten Beschichtung eingebracht werden. So können die erhabenen Bereiche der Prägestruktur beispielsweise unterschiedliche Höhe aufweisen. Wird die Prägestruktur im Stichtiefdruckverfahren erzeugt, bedeutet dies, dass die Gravurtiefen für die Prägestruktur unterschiedlich gewählt werden. Die Bereiche geringerer Gravurtiefe werden beim Druck- bzw. Prägevorgang mit weniger Farbe gefüllt und erzeugen bei Verwendung lasierender Farben Bereiche mit einem helleren Farbton. Auf diese Weise können mittels der erfindungsgemäßen zweiten Beschichtung zusätzliche visuell unter allen Betrachtungswinkeln erkennbare Informationen erzeugt werden. Aufgrund der unterschiedlichen Prägehöhen treten allerdings bei Änderung des Betrachtungswinkels zusätzliche optisch variable Effekte auf, die durch die relative Lage der ersten und zweiten Beschichtung sowie der Prägestruktur und deren Zusammenspiel bedingt sind.

Die zusätzliche Information kann auch durch eine ungeprägte Randkontur betont werden, wie in der WO 02/20280 bereits beschrieben. Alternativ kann die Randkontur auch im Sinne der Erfindung mit der zweiten Beschichtung und der geprägten Struktur versehen werden.

Wie bereits mehrfach erwähnt, wird das erfindungsgemäße optisch variable Sicherheitselement vorzugsweise in zwei Druckvorgängen erzeugt. In einem ersten Druckvorgang, vorzugsweise im Offsetverfahren oder einem indirekten Druckverfahren, wird die erste Beschichtung auf den Datenträger aufgedruckt. In dem zweiten Druckvorgang, der erfindungsgemäß vorzugsweise im Stichtiefdruckverfahren erfolgt, werden schließlich die Prägestruktur und die zweite Beschichtung gleichzeitig auf den Datenträger übertragen.

Ähnliche optische Effekte können erzielt werden, wenn die beiden Beschichtungen im Offset- und/oder Siebdruck registerhaltig zueinander aufgedruckt werden und dieser bedruckte Bereich anschließend ebenfalls registerhaltig mit einer Blindprägung versehen wird. Auf diese Weise können alle im Rahmen der Erfindung beschriebenen Ausführungsformen hergestellt werden. Gemäß einer speziellen Ausführungsform kann hierbei beispielsweise ein Linienraster in einer ersten Farbe und zumindest teilweise überlappend hierzu eine zweite Beschichtung aus lasierenden Farben vollflächig aufgebracht werden. In einem letzten Schritt wird der gesamte bedruckte Bereich registerhaltig mit einer Blindprägung in Form eines Linienrasters versehen.

Die umgekehrte Reihenfolge, zuerst die Prägestruktur und die zweite Beschichtung auf dem Datenträger vorzusehen und anschließend die erste Beschichtung, ist jedoch nicht ausgeschlossen.

Weitere Ausführungsformen und Vorteile der Erfindung werden anhand der Figuren erläutert.

Es zeigen:
- Fig. 1: einen erfindungsgemäßen Datenträger,
- Fig. 2: einen Schnitt entlang A - A in Fig.1,
- Fig. 3: schematische Darstellung der relativen Lage zwischen der ersten und zweiten Beschichtung des erfindungsgemäßen Sicherheitselements in einer ersten Ausführungsform,
- Fig. 4: schematische Darstellung der relativen Lage zwischen der ersten und zweiten Beschichtung des erfindungsgemäßen Sicherheitselements gemäß einer zweiten Ausführungsform,
- Fig. 5: schematische Darstellung der relativen Lage der ersten und zweiten Beschichtung des erfindungsgemäßen Sicherheitselements gemäß einer dritten Ausführungsform, wobei die Prägestruktur unterschiedlich hohe erhabene Bereiche aufweist,
- Fig. 6: erfindungsgemäße Prägeform im Querschnitt für die Herstellung der Prägestruktur mit einer zusätzlichen Information,
- Fig. 7.: weitere Ausführungsform der erfindungsgemäßen Prägeform,
- Fig. 8: weitere Variante des erfindungsgemäßen Sicherheitselements,
- Fig. 9: weitere Variante des erfindungsgemäßen Sicherheitselements,
- Fig. 10: spezielle Ausführungsform des erfindungsgemäßen Sicherheitselements, bei der die Prägestruktur in Form einer Matrix vorliegt,
- Fig.11: spezielle Ausführungsform der Prägestruktur des erfindungsgemäßen Sicherheitselements.

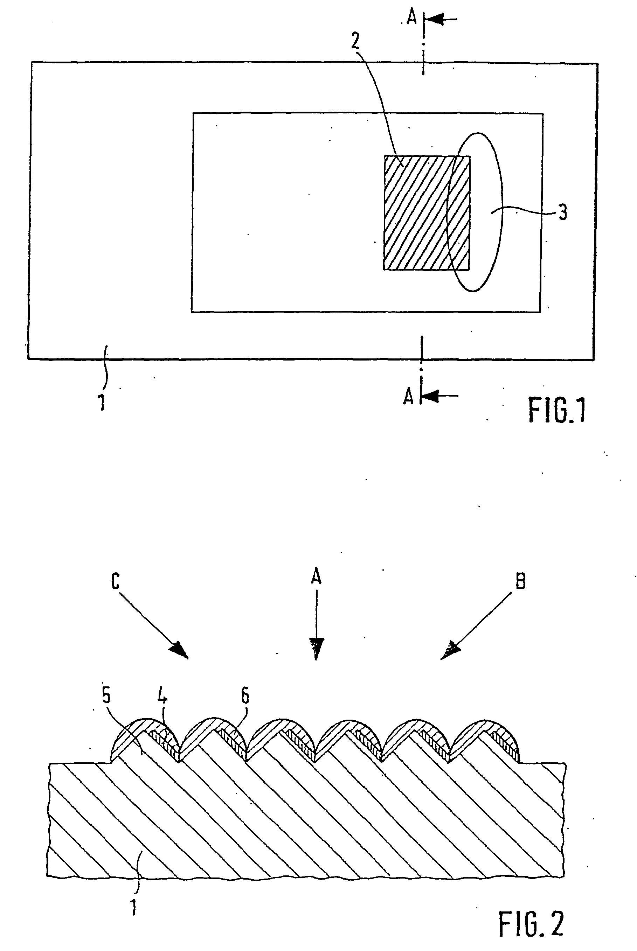

Fig. 1 zeigt einen erfindungsgemäßen Datenträger 1 mit einer optisch variablen Struktur 2. Die optisch variable Struktur 2 stellt ein ohne Hilfsmittel prüfbares Sicherheitsmerkmal dar, das gegebenenfalls neben weiteren Sicherheitsmerkmalen zur Überprüfung der Echtheit des Datenträgers dient.

Bei den weiteren Sicherheitsmerkmalen kann es sich beispielsweise um einen Sicherheitsfaden oder ein Wasserzeichen handeln. Wie im Rahmen der Erfindung bevorzugt, ist die optisch variable Struktur 2 im Bereich eines Stichtiefdruckmotivs 3 des Wertdokuments 1 angeordnet. Die farbliche und geometrische Gestaltung des optisch variablen Sicherheitselements 2 kann dabei an das Stichtiefdruckmotiv 3 angepasst sein. Je nach Ausführung des Stichtiefdruckmotivs 3 kann die optisch variable Struktur 2 auch vollständig in dieses Stichtiefdruckmotiv integriert werden.

Alternativ kann das erfindungsgemäße Sicherheitselement jedoch auch an jeder anderen Stelle des Wertdokuments 1 angeordnet sein.

Besonders vorteilhaft lässt sich die erfindungsgemäße optisch variable Struktur 2 bei Banknoten, aber auch anderen Wertpapieren, wie Aktien oder Schecks einsetzen. Auch Etiketten oder andere Elemente für die Produktsicherung können mit einer solchen optisch variablen Struktur versehen werden.

Die optisch variable Struktur 2 besteht gemäß der gezeigten Ausführungsform aus einer ersten zur Oberfläche des Datenträgers kontrastierenden Beschichtung in Form eines Aufdrucks sowie einer Prägestruktur und einer zweiten Beschichtung, die farblich ebenfalls zur Datenträgeroberfläche kontrastiert und deckungsgleich zu den erhabenen Bereichen der Prägestruktur angeordnet ist. Die verschiedenen Elemente der optisch variablen Struktur 2 werden so miteinander kombiniert, dass wenigstens Teilbereiche der ersten Beschichtung bei senkrechter Betrachtung vollständig sichtbar sind, bei Schrägbetrachtung aber verdeckt werden.

Dieses Prinzip wird anhand des in Fig. 2 gezeigten Schnitts entlang A - A deutlich. Die erste Beschichtung 4 besteht im hier dargestellten Fall aus einem Linienraster 4 und auch die Prägestruktur 5 ist in Form einer Linienrasterstruktur ausgebildet. Deckungsgleich zur Prägestruktur 5 ist die zweite Farbschicht 6 angeordnet, die damit die erste Beschichtung 4 vollständig abdeckt. Bei senkrechter Betrachtung aus der Betrachtungsrichtung A erkennt der Betrachter idealerweise lediglich eine farbige Fläche, deren Farbe weit gehend der Mischfarbe der ersten Beschichtung 4 und der zweiten Beschichtung 6 entspricht. Bei schräger Betrachtung aus der Betrachtungsrichtung B ist dem Betrachter die Flanke der Prägestruktur 5 zugewandt, die mit den Drucklinien des Druckrasters 4 zusammenfällt. Der Betrachter nimmt daher aus der Betrachtungsrichtung B einen fast einheitlichen farbigen Aufdruck in der Farbe der Mischfarbe aus der ersten Beschichtung 4 und der zweiten Beschichtung 6 wahr. Bei der Betrachtungsrichtung C sind dem Betrachter die Flanken der Prägestruktur 5 zugewandt, die mit der jeweiligen Lücke des Linienrasters 4 zusammenfallen, so dass der Betrachter aus dieser Richtung eine ebenfalls einheitlich farbige Fläche in der Farbe der zweiten Beschichtung 6 wahrnimmt.

Die Prägestruktur 5 sowie die zweite Beschichtung 6 werden vorzugsweise mittels einer Stichtiefdruckplatte in das Wertdokument 1 übertragen. Dies hat den Vorteil, dass das Sicherheitselement gleichzeitig mit dem Stichtiefdruckmotiv 3 in einem Arbeitsgang erzeugt werden kann. Hierfür wird in die Druckplatte sowohl das Negativ der gewünschten Prägestruktur 5 als auch das Stichtiefdruckmotiv eingraviert. Während des Druckvorgangs wird die Druckplatte mit Farbe gefüllt und anschließend wird das Datenträgermaterial 1 in die gravierten Bereiche der Druckplatte gepresst und nachhaltig verformt. Durch den hohen Anpressdruck zeichnet sich die Prägung 5 auch auf der Rückseite des Datenträgermaterials 1 ab.

Die Druckplatte kann für den Druckvorgang mit einer einheitlichen Farbe eingefärbt werden, so dass die zweite Beschichtung 6 sowie das Stichtiefdruckmotiv 3 die gleiche Farbe aufweisen. Es können jedoch auch unterschiedliche Farben verwendet werden.

Da für die zweite Beschichtung 6 erfindungsgemäß lasierende Farben verwendet werden, kann der Betrachter im Überlappungsbereich zwischen der ersten und zweiten Beschichtung 4, 6 die Mischfarbe der beiden Farben erkennen.

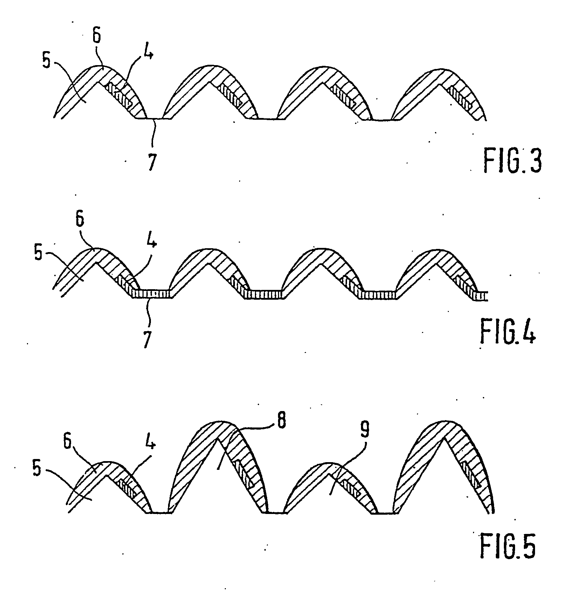

Die in Fig. 2 dargestellte Prägestruktur 5 besteht, im Schnitt betrachtet, aus direkt aneinander grenzenden Dreieckprofilen. Die Dreieckprofile können jedoch auch geringfügig voneinander beabstandet sein. Auch die relative Lage der ersten Beschichtung 4 und der zweiten Beschichtung 6 bzw. der Prägestruktur 5 kann variieren, wie anhand der Fig. 3 bis 5 deutlich wird. Hier wird lediglich das Prägeprofil sowie die relative Lage der Beschichtungen 4, 6 dargestellt.

In Fig. 3 sind die Dreieckprofile der Prägestruktur 5 voneinander beabstandet, was durch die Verbindungsstege 7 angedeutet wird. Die erste Beschichtung 4 ist, wie auch in Fig. 2 dargestellt, auf einer der Flanken der Prägestruktur 5 unter der zweiten Beschichtung 6 angeordnet. Die Verbindungsstege 7 dagegen sind beschichtungsfrei, so dass in diesem Bereich die Datenträgeroberfläche sichtbar ist.

In Fig. 4 ist eine Variante dargestellt, bei welcher die erste Beschichtung 4 vollständig die Verbindungsstege 7 sowie einen Teil der Flanken der Prägestruktur 5 abdeckt. In diesem Beispiel überdeckt die zweite Beschichtung 6 die erste Beschichtung 4 lediglich teilweise, so dass auch die erste Beschichtung 4 in Teilbereichen sichtbar ist.

Fig. 5 zeigt eine weitere Ausführungsform, bei welcher die relative Lage der Prägestruktur 5, der ersten Beschichtung 4 und der zweiten Beschichtung 6 der bereits in Fig. 3 dargestellten Ausführungsform entspricht. Allerdings weisen die erhabenen Bereiche der Prägestruktur 5 in diesem Beispiel unterschiedliche Höhe auf. Werden die Prägestruktur 5 sowie die Beschichtung 6 im farbführenden Stichtiefdruckverfahren erzeugt, so bedeutet dies, dass in den Bereichen der Prägestruktur mit den höheren erhabenen Bereichen mehr Farbe übertragen wird. Aufgrund der höheren Farbschichtdicke im Bereich 8 der Prägung 5 erscheinen diese Teilbereiche 8 der Prägung 5 in einem dunkleren Farbton als die Teilbereiche 9 der Prägung 5. Auf diese Weise lassen sich Zusatzinformationen in dem optisch variablen Element erzeugen.

Derartige visuell erkennbare Zusatzinformationen lassen sich jedoch auch auf andere Art und Weise erzeugen. Bei der Verwendung lasierender Druckfarben kann die Zusatzinformation auch über eine höhere Farbschichtdicke in bestimmten Bereichen des Druckbildes dargestellt werden.

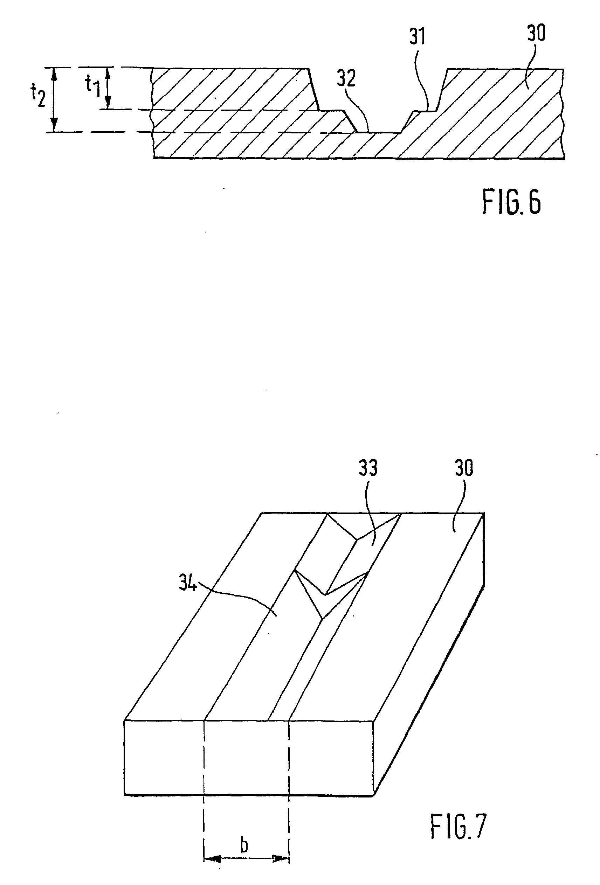

Fig. 6 zeigt eine Druckplatte 30 im Querschnitt, nut welcher eine derartige Zusatzinformation erzeugt werden kann. Das erste Druckbild 31 wird hierbei mit einer Tiefe t₁ in die Druckplatte 30 eingraviert. Das zweite Druckbild 32, das dem ersten Druckbild 31 überlagert ist, wird dabei mit einer Tiefe t₂ in die Druckplatte 30 eingraviert. Da die Gravur für das zweite Druckbild 32 tiefer liegt als die Gravur für das erste Druckbild 31, wird im Bereich des Druckbilds 32 mehr Farbe übertragen. Bei der erfindungsgemäßen Verwendung lasierender Druckfarben ergibt sich daher im Bereich des Druckbilds 32 ein dunklerer Farbeindruck und das Druckbild 32 wird vor dem helleren Druckbild 31 erkennbar. Die beiden Druckbilder 31, 32 bilden gemäß diesem Ausführungsbeispiel die zweite Beschichtung, die gleichzeitig mit der Prägestruktur im Druckvorgang auf das Wertdokument übertragen wird.

Fig. 7 zeigt eine weitere Variante, wie in der zweiten Beschichtung zusätzliche Informationen erzeugt werden können. Auch hier ist eine Druckplatte 30 dargestellt, in die eine Linie mit der Breite b eingefräst ist. Diese Linie setzt sich aus unterschiedlichen Bereichen 33, 34 zusammen, die sich hinsichtlich ihrer Tiefe und Flankensteilheit unterscheiden. Im fertigen. Druckbild zeigt diese Linie entlang ihrer Länge unterschiedliche Farbeindrücke, da der Farbauftrag in den Bereichen 33, 34 unterschiedlich ist.

Bei zu großer Linientiefe kann es beim Prägevorgang unter Umständen zu Papierrissen kommen. Um daher die gleiche Linienbreite beibehalten zu können, kann es daher unter Umständen notwendig sein, die Linie genau so breit, aber weniger tief auszugestalten. Bei der Verwendung eines Fräswerkzeugs zur Herstellung der Druckplatte ist es daher unter Umständen notwendig, die Linie mittels eines schmaleren Gravierwerkzeugs herzustellen, das dennoch die Breite der gewünschten Gravurlinie durch entsprechende Führung des Fräswerkzeugs herstellt.

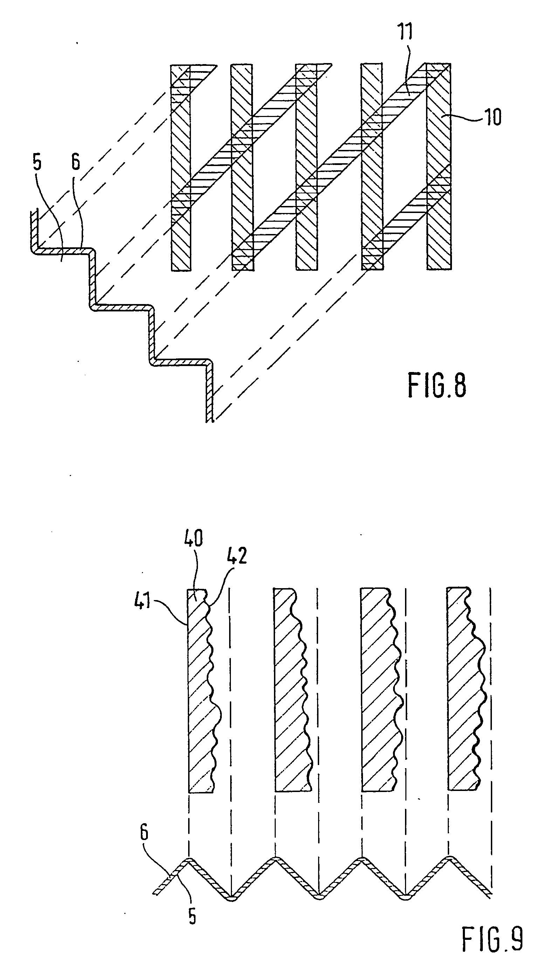

Fig. 8 zeigt eine weitere Ausführungsform der erfindungsgemäßen optisch variablen Struktur. In diesem Beispiel besteht die erste Beschichtung aus zwei über Kreuz angeordneten Linienrastern 10,11, die auch farblich unterschiedlich gestaltet sein können. Im gezeigten Beispiel sind die Linien des Druckrasters 11 auf einer der Flanken der Prägestruktur 5 angeordnet. Diese Zuordnung ergibt sich aus den Profilskizzen am unteren Rand der Fig. 8, in welcher ein Ausschnitt der Prägestruktur 5 sowie der Beschichtung 6 im Querschnitt dargestellt ist.

Fig. 9 zeigt eine Ausführungsform der erfindungsgemäßen optisch variablen Struktur, bei welcher die erste Beschichtung aus einem einseitigen Raster 40 besteht. Dieses Raster geht von einer geraden Grundlinie 41 aus. Diegegenüberliegende Linie 42 des Rasterelements ist unregelmäßig gestaltet und kann von Rasterelement zu Rasterelement variieren. Mit diesem besonderen Raster lassen sich sehr kontrastreiche Halbtonbilder darstellen. Wie bereits anhand von Fig. 8 erläutert, kommen diese Rasterelemente 40 vorzugsweise auf den Flanken der Prägestruktur, 5 zu liegen und werden von der zweiten Beschichtung 6 überdeckt.

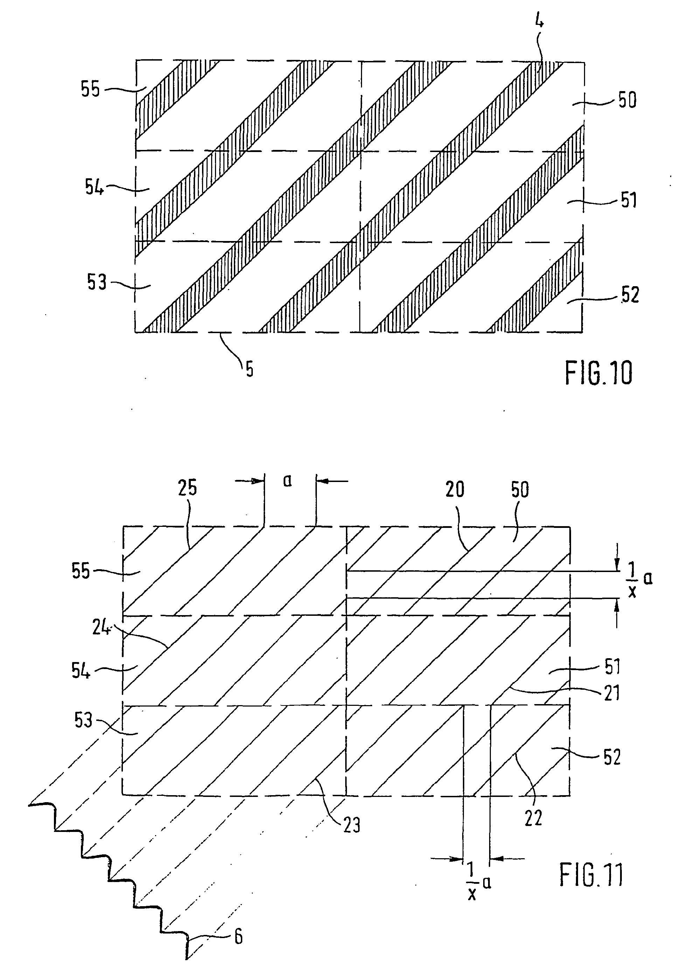

Fig. 10 zeigt den prinzipiellen Aufbau einer erfindungsgemäßen optisch variablen Struktur 2 in Aufsicht. Sie besteht aus der ersten Beschichtung in Form eines Linienrasters 4 mit konstanter Rasterweite, wobei das Linienraster aus voneinander beabstandeten gedruckten Linien besteht. Überlappend zu diesem Aufdruck 4 ist die Prägestruktur 5 angeordnet, die aus Gründen der Übersichtlichkeit lediglich durch den strichlierten Rahmen angedeutet wird. Die gezeigte Prägestruktur 5 ist in sechs Teilbereiche 50, 51, 52, 53, 54, 55 unterteilt, in welchen Teilprägestrukturen angeordnet sind, die, wie bereits erwähnt, nicht dargestellt werden. Auch die zweite Beschichtung, die deckungsgleich zu den erhabenen Bereichen der Teilprägestrukturen angeordnet ist, ist nicht dargestellt Die Teilbereiche 50, 51, 52, 53, 54, 55 grenzen hierbei direkt aneinander und bilden eine zweidimensionale Matrix. Je nach Ausführungsform kann diese Matrix in vertikaler Richtung n Teilbereiche aufweisen und in horizontaler Richtung m Teilbereiche, wobei n, m ≥ 1, vonzugsweise n, m ≥ 2 ist. Im gezeigten Beispiel ist n =̂ 3 und m =̂ 2. Deckungsgleich zu den erhabenen Bereichen der Prägestruktur 5 ist auch in diesem Ausführungsbeispiel eine zweite Beschichtung angeordnet, die ebenfalls nicht dargestellt ist.

Die relative Lage der Teilprägestrukturen und des Linienrasters 4 variiert innerhalb der Prägestruktur 5 von Teilbereich zu Teilbereich, so dass sich die Teilbereiche 50, 51, 52, 53, 54, 55 hinsichtlich ihrer Farbe, ihres Farbtons oder ihrer Helligkeit unterscheiden und damit visuell als kontrastierende Teilbereiche erkennbar sind. Bei der Änderung des Betrachtungswinkels variieren die Farb- und Hell-/Dunkeleindrücke der Teilbereiche. Verstärkt wird dieser Eindruck durch die überlagerte zweite Beschichtung 6.

In Fig. 11 ist eine weitere spezielle Ausführungsform der Prägestruktur 5 schematisch dargestellt. Sie setzt sich aus den Teilbereichen 50, 51, 52, 53, 54, 55 zusammen, in denen jeweils unterschiedliche Teilprägestrukturen 20, 21, 22, 23, 24, 25 angeordnet sind. Die schräg verlaufenden Linien in Fig.11 deuten dabei jeweils den Verlauf sowie die Anordnung der jeweiligen Teilprägestruktur 20, 21, 22, 23, 24, 25 an. Die dargestellten Linien kennzeichnen dabei die Täler der Prägestruktur, wie aus der Skizze im linken Bereich unter der Prägestruktur 5 deutlich wird, die die Teilprägestruktur 23 im Querschnitt darstellt. Der besseren Übersicht wegen wurden die Zenite der Teilprägestrukturen 20, 21, 22, 23, 24, 25 nicht mit Linien in den Figuren dargestellt.

Alle Teilprägestrukturen 20, 21, 22, 23, 24, 25 weisen die gleiche Rasterweite a auf. Jeweils zwei aneinander grenzende Teilprägestrukturen 20, 21, 22, 23, 24, 25 sind jedoch versetzt zueinander angeordnet. Im gezeigten Beispiel beträgt der Versatz einen Bruchteil 1/x der Rasterweite a. Vorzugsweise werden zwei benachbarte Teilprägestrukturen um ein Drittel der Rasterweite a zueinander versetzt angeordnet. Die erste Beschichtung wurde aus Gründen der Übersichtlichkeit in Fig.11 nicht dargestellt. Da jedoch die Anordnung der Teilprägestrukturen sowie der deckungsgleich hierzu angeordneten zweiten Beschichtung von Teilbereich zu Teilbereich variiert, variiert auch die relative Position zwischen der ersten Beschichtung und dem jeweiligen Teilprägeraster 20, 21, 22, 23, 24, 25 entsprechend. Auf diese Weise häufig wechselnde Hell-/Dunkelkontraste sowie sich ändernde Farbeindrücke erzeugt, die visuell deutlich hervortreten und gut erkennbar sind. Wird der Versatz beispielsweise so gewählt, dass sich die Teilprägestrukturen innerhalb der Prägestruktur 5 wiederholen, so zeigen unter einem Betrachtungswinkel mehrere Teilbereiche das gleiche Erscheinungsbild. Die Teilprägestrukturen 20, 21, 22, 23, 24, 25 der erfindungsgemäßen Prägestruktur 5 müssen jedoch nicht grundsätzlich um einen Bruchteil der Rasterweite a versetzt angeordnet sein. Jeder andere Versatz ist ebenso denkbar. Auch müssen nicht alle Teilprägestrukturen 20, 21, 22, 23, 24, 25 versetzt zueinander angeordnet sein. Unter Umständen ist es ausreichend, wenn lediglich zwei der Teilbereiche 50, 51, 52, 53, 54, 55 mit versetzt zueinander angeordneten Teilprägestrukturen 20, 21, 22, 23, 24, 25 versehen sind. Diese müssen auch nicht notwendigerweise direkt aneinander grenzen. Ebenso können einzelne der Teilbereiche 50, 51, 52, 53, 54, 55 mit Teilprägestrukturen 20, 21, 22, 23, 24, 25 unterschiedlicher Rasterweite a versehen werden. Auch die Verlaufsrichtung einzelner Teilprägestrukturen 20, 21, 22, 23, 24, 25 kann gegenüber der Verlaufsrichtung benachbarter Teilprägestrukturen 20, 21, 22, 23, 24, 25 varüeren. So kann beispielsweise die Teilprägestruktur 20 unter einem Winkel von 90° zur Teilprägestruktur 21 angeordnet werden.

Bei den gezeigten Beispielen wurde die erste Beschichtung immer zuerst aufgebracht und anschließend die Prägung 5 bzw. die zweite Beschichtung 6. Alternativ ist es selbstverständlich auch möglich, zuerst die Prägestruktur sowie die zweite Beschichtung aufzubringen und anschließend die erste Beschichtung auf die zweite Beschichtung aufzudrucken.

## Patentansprüche

1. Datenträger (1) mit einer optisch variablen Struktur (2), die eine Prägestruktur (5) mit erhabenen Bereichen und eine zur Oberfläche des Datenträgers kontrastierende erste Beschichtung (4) die nur bereichsweise vorgesehen ist, aufweist, wobei die Prägestruktur und die Beschichtung so kombiniert sind, dass wenigstens Teile der Beschichtung bei senkrechter Betrachtung vollständig sichtbar sind, bei Schrägbetrachtung aber verdeckt werden, so dass bei abwechselnd senkrechter und schräger Betrachtung ein Kippeffekt entsteht, und wobei die optisch variable Struktur zumindest in Teilbereichen eine zweite Beschichtung (6) aufweist, die zumindest in Teilbereichen überlappend zur ersten Beschichtung angeordnet ist, **dadurch gekennzeichnet, dass** die zweite Beschichtung ebenfalls zur Datenträgeroberfläche kontrastierend ist, und dass wenigstens eine der Beschichtungen zumindest teilweise aus lasierenden Farben besteht.

2. Datenträger nach Anspruch 1, **dadurch gekennzeichnet, dass** die zweite Beschichtung deckungsgleich zu zumindest Teilen der erhabenen Bereiche der Prägestruktur angeordnet ist.

3. Datenträger nach Anspruch 2, **dadurch gekennzeichnet, dass** der Datenträger ein Stichtiefdruckmotiv aufweist.

4. Datenträger nach Anspruch 3, **dadurch gekennzeichnet, dass** zumindest Teile der Prägestruktur im Bereich des Stichtiefdruckmotivs angeordnet sind.

5. Datenträger nach Anspruch 3 oder 4, **dadurch gekennzeichnet, dass** die zweite Beschichtung die gleiche Farbe aufweist wie das Stichtiefdruckmotiv.

6. Datenträger nach einem der Ansprüche 3 bis 5, **dadurch gekennzeichnet, dass** die zweite Beschichtung Teil des Stichtiefdruckmotivs ist.

7. Datenträger nach wenigstens einem der Ansprüche 1 bis 6, **dadurch gekennzeichnet, dass** die zweite Beschichtung eine zur ersten Beschichtung kontrastierende Farbe aufweist.

8. Datenträger nach wenigstens einem der Ansprüche 1 bis 7, **dadurch gekennzeichnet, dass** die für die erste Beschichtung verwendete Farbe einen Komplementärkontrast zur Farbe der zweiten Beschichtung aufweist.

9. Datenträger nach wenigstens einem der Ansprüche 1 bis 8, **dadurch gekennzeichnet, dass** die optisch variable Struktur eine metallische Untergrundschicht aufweist.

10. Datenträger nach wenigstens einem der Ansprüche 1 bis 9, **dadurch gekennzeichnet, dass** die erste und/oder zweite Beschichtung zumindest bereichsweise maschinell lesbare Eigenschaften aufweist.

11. Datenträger nach Anspruch 10, **dadurch gekennzeichnet, dass** die erste und/oder zweite Beschichtung magnetische, elektrisch leitfähige oder lumineszierende Eigenschaften aufweist.

12. Datenträger nach wenigstens einem der Ansprüche 1 bis 11, **dadurch gekennzeichnet, dass** die optisch variable Struktur mit einer zusätzlichen transparenten, optisch variablen Schicht oder einem Folienelement überlagert oder unterlegt ist.

13. Datenträger nach wenigstens einem der Ansprüche 1 bis 12, **dadurch gekennzeichnet, dass** eine der Beschichtungen mehrfarbig ausgeführt ist.

14. Datenträger nach wenigstens einem der Ansprüche 1 bis 13, **dadurch gekennzeichnet, dass** die erste Beschichtung eine aufgedruckte Rasterstruktur ist.

15. Datenträger nach Anspruch 14, **dadurch gekennzeichnet, dass** die Rasterstruktur ein Linienraster mit konstanter Rasterweite ist.

16. Datenträger nach Anspruch 15, **dadurch gekennzeichnet, dass** das Linienraster aus farbigen, von einander beabstandeten Linien oder farbigen, direkt aneinander grenzenden Linien besteht.

17. Datenträger nach Anspruch 15 oder 16, **dadurch gekennzeichnet, dass** das Linienraster zumindest bereichsweise Verdickungen aufweist.

18. Datenträger nach Anspruch 17, **dadurch gekennzeichnet, dass** das Linienraster die Verdickungen nur auf einer Seite aufweist.

19. Datenträger nach Anspruch 17 oder 18, **dadurch gekennzeichnet, dass** Linienraster ein Halbtonbild darstellt.

20. Datenträger nach wenigstens einem der Ansprüche 1 bis 19, **dadurch gekennzeichnet, dass** die Prägestruktur eine geprägte Rasterstruktur ist.

21. Datenträger nach wenigstens einem der Ansprüche 1 bis 20, **dadurch gekennzeichnet, dass** die Prägestruktur als Linienraster mit konstanter Rasterweite ausgeführt ist.

22. Datenträger nach wenigstens einem der Ansprüche 1 bis 20, **dadurch gekennzeichnet, dass** die Prägestruktur bereichsweise eine variierende Rasterweite aufweist.

23. Datenträger nach wenigstens einem der Ansprüche 1 bis 22, **dadurch gekennzeichnet, dass** die Prägestruktur und die zweite Beschichtung als farbiger Stichtiefdruck ausgeführt sind.

24. Datenträger nach wenigstens einem der Ansprüche 1 bis 23, **dadurch gekennzeichnet, dass** die erste Beschichtung ein dunkles Linienraster ist und die zweite Beschichtung in Form eines hellen, farbigen Linienrasters vorliegt.

25. Datenträger nach wenigstens einem der Ansprüche 1 bis 24, **dadurch gekennzeichnet, dass** die Prägestruktur erhabene Bereiche unterschiedlicher Höhe aufweist.

26. Datenträger nach wenigstens einem der Ansprüche 1 bis 25, **dadurch gekennzeichnet, dass** die Prägestruktur und die erste Beschichtung die gleiche Rasterweite aufweisen.

27. Datenträger nach wenigstens einem der Ansprüche 1 bis 26, **dadurch gekennzeichnet, dass** die Prägestruktur in Teilbereiche unterteilt ist, in denen unterschiedliche Teilprägestrukturen vorgesehen sind.

28. Datenträger nach Anspruch 27, **dadurch gekennzeichnet, dass** die Teilbereiche eine zweidimensionale Matrix bilden, die in horizontaler Richtung m Teilbereiche und in vertikaler Richtung n Teilbereiche aufweist mit m,n ≥1, wobei vorzugsweise m,n ≥ 2.

29. Datenträger nach Anspruch 27 oder 28, **dadurch gekennzeichnet, dass** die Teilprägestrukturen in wenigstens zwei aneinander grenzenden Teilbereichen um einen Bruchteil, insbesondere ein Drittel der Rasterweite versetzt angeordnet sind.

30. Datenträger nach wenigstens einem der Ansprüche 27 bis 29, **dadurch gekennzeichnet, dass** zumindest die Teilprägestrukturen eines Teilbereichs eine ungeprägte Randkontur aufweisen.

31. Datenträger nach wenigstens einem der Ansprüche 1 bis 30, **dadurch gekennzeichnet, dass** der Datenträger ein Wertpapier, insbesondere eine Banknote ist.

32. Verfahren zur Herstellung eines Datenträgers (1) mit einer optisch variablen Struktur (2) die eine Prägestruktur (5) mit erhabenen Bereichen und eine zur Oberfläche des Datenträgers kontrastierende, nur bereichsweise auf den Datenträger aufgebrachte erste Beschichtung (4) aufweist, wobei die Prägestruktur und die Beschichtung so kombiniert werden, dass wenigstens Teile der Beschichtung bei senkrechter Betrachtung vollständig sichtbar sind, bei Schrägbetrachtung aber verdeckt werden, so dass bei abwechselnd senkrechter und schräger Betrachtung ein Kippeffekt entsteht, umfassend die folgenden Schritte:
- nur bereichsweises Aufbringen der ersten Beschichtung auf den Datenträger,
- Prägen der Prägestruktur in den Datenträger mittels eines Prägewerkzeugs, **dadurch gekennzeichnet, dass** mit dem Prägen eine zweite Beschichtung (6) zumindest in Teilbereichen überlappend zur ersten Beschichtung auf den Datenträger übertragen wird,
wobei für die zweite Beschichtung eine ebenfalls zur Oberfläche des Datenträgers kontrastierende Farbe gewählt wird, dass das Übertragen der zweiten Beschichtung auf den Datenträger deckungsgleich zu zumindest Teilen der erhabenen Bereiche der Prägestruktur erfolgt, und dass wenigstens eine der Beschichtungen zumindest teilweise aus lasierenden Farben besteht.

33. Verfahren nach Anspruch 32, **dadurch gekennzeichnet, dass** der Datenträger mit einem Stichtiefdruckmotiv versehen wird und zumindest Teile der Prägestruktur im Bereich des Stichtiefdruckmotivs angeordnet werden.

34. Verfahren nach Anspruch 32 oder 33, **dadurch gekennzeichnet, dass** die erste Beschichtung im Offsetverfahren erzeugt wird.

35. Verfahren nach wenigstens einem der Ansprüche 32 bis 34, **dadurch gekennzeichnet, dass** die erste Beschichtung als Linienraster erzeugt wird.

36. Verfahren nach wenigstens einem der Ansprüche 32 bis 35, **dadurch gekennzeichnet, dass** die Prägestruktur und die zweite Beschichtung im farbführenden Stichtiefdruckverfahren erzeugt werden.

37. Verfahren nach Anspruch 36, **dadurch gekennzeichnet, dass** die zweite Beschichtung im Farbschnitt ausgeführt wird.

38. Verfahren nach wenigstens einem der Ansprüche 32 bis 37, **dadurch gekennzeichnet, dass** die erste Beschichtung zuerst aufgebracht wird, und in einem zweiten Schritt die Prägestruktur und die zweite Beschichtung gleichzeitig übertragen werden.

## Claims

1. A data carrier (1) with an optically variable structure (2) having an embossed structure (5) with raised areas and a first coating (4) contrasting with the surface of the data carrier and provided only in certain areas, the embossed structure and the coating being so combined that at least parts of the coating are completely visible upon perpendicular viewing but concealed upon oblique viewing so that a tilt effect arises upon alternate perpendicular and oblique viewing, and the optically variable structure having at least in partial areas a second coating (6) disposed in overlap with the first coating at least in partial areas, **characterized in that** the second coating likewise contrasts with the data carrier surface, and at least one of the coatings consists at least partly of translucent inks.

2. The data carrier according to claim 1, **characterized in that** the second coating is disposed congruent to at least parts of the raised areas of the embossed structure.

3. The data carrier according to claim 2, **characterized in that** the data carrier has an intaglio printed motif.

4. The data carrier according to claim 3, **characterized in that** at least parts of the embossed structure are disposed in the area of the intaglio printed motif.

5. The data carrier according to claim 3 or 4, **characterized in that** the second coating has the same color as the intaglio printed motif.

6. The data carrier according to any of claims 3 to 5, **characterized in that** the second coating is part of the intaglio printed motif.

7. The data carrier according to at least one of claims 1 to 6, **characterized in that** the second coating has a color contrasting with the first coating.

8. The data carrier according to at least one of claims 1 to 7, **characterized in that** the color used for the first coating has a complementary contrast with the color of the second coating.

9. The data carrier according to at least one of claims 1 to 8, **characterized in that** the optically variable structure has a metallic background layer.

10. The data carrier according to at least one of claims 1 to 9, **characterized in that** the first and/or second coating has machine-readable properties at least in certain areas.

11. The data carrier according to claim 10, **characterized in that** the first and/or second coating has magnetic, electrically conductive or luminescent properties.

12. The data carrier according to at least one of claims 1 to 11, **characterized in that** the optically variable structure is superimposed or underlaid with an additional transparent, optically variable layer or a foil element.

13. The data carrier according to at least one of claims 1 to 12, **characterized in that** one of the coatings is of multicolor design.

14. The data carrier according to at least one of claims 1 to 13, **characterized in that** the first coating is a printed screen structure.

15. The data carrier according to claim 14, **characterized in that** the embossed structure is a line screen with a constant screen ruling.

16. The data carrier according to claim 15, **characterized in that** the line screen consists of colored, spaced-apart lines or colored, directly adjoining lines.

17. The data carrier according to claim 15 or 16, **characterized in that** the line screen has thickened areas at least in certain areas.

18. The data carrier according to claim 17, **characterized in that** the line screen has the thickened areas only on one side.

19. The data carrier according to claim 17 or 18, **characterized in that** the line screen represents a halftone image.

20. The data carrier according to at least one of claims 1 to 19, **characterized in that** the embossed structure is an embossed screen structure.

21. The data carrier according to at least one of claims 1 to 20, **characterized in that** the embossed structure is executed as a line screen with a constant screen ruling.

22. The data carrier according to at least one of claims 1 to 20, **characterized in that** the embossed structure has a varying screen ruling in certain areas.

23. The data carrier according to at least one of claims 1 to 22, **characterized in that** the embossed structure and the second coating are executed as colored intaglio prints.

24. The data carrier according to at least one of claims 1 to 23, **characterized in that** the first coating is a dark line screen and the second coating is present in the form of a light, colored line screen.

25. The data carrier according to at least one of claims 1 to 24, **characterized in that** the embossed structure has raised areas of different height.

26. The data carrier according to at least one of claims 1 to 25, **characterized in that** the embossed structure and the first coating have the same screen ruling.

27. The data carrier according to at least one of claims 1 to 26, **characterized in that** the embossed structure is subdivided into partial areas where different partial embossed structures are provided.

28. The data carrier according to claim 27, **characterized in that** the partial areas form a two-dimensional matrix having *m* partial areas in the horizontal direction and *n* partial areas in the vertical direction, where *m*, *n* ≥ 1, preferably *m, n ≥* 2.

29. The data carrier according to claim 27 or 28, **characterized in that** the partial embossed structures in at least two adjoining partial areas are disposed offset by a fraction, in particular one third, of the screen ruling.

30. The data carrier according to at least one of claims 27 to 29, **characterized in that** at least the partial embossed structures of one partial area have an unembossed edge contour.

31. The data carrier according to at least one of claims 1 to 30, **characterized in that** the data carrier is a paper of value, in particular a bank note.

32. A method for producing a data carrier (1) with an optically variable structure (2) having an embossed structure (5) with raised areas and a first coating (4) contrasting with the surface of the data carrier and applied to the data carrier only in certain areas, the embossed structure and the coating being so combined that at least parts of the coating are completely visible upon perpendicular viewing but concealed upon oblique viewing so that a tilt effect arises upon alternate perpendicular and oblique viewing, comprising the following steps:
- applying the first coating to the data carrier only in certain areas,
- embossing the embossed structure in the data carrier by means of an embossing tool, **characterized in that** with the embossing a second coating (6) is transferred to the data carrier in overlap with the first coating at least in partial areas,
whereby a color likewise contrasting with the surface of the data carrier is selected for the second coating, the transferring of the second coating to the data carrier is done congruently to at least parts of the raised areas of the embossed structure, and at least one of the coatings consists at least partly of translucent inks.

33. The method according to claim 32, **characterized in that** the data carrier is provided with an intaglio printed motif and at least parts of the embossed structure are disposed in the area of the intaglio printed motif.

34. The method according to claim 32 or 33, **characterized in that** the first coating is produced by the offset process.

35. The method according to at least one of claims 32 to 34, **characterized in that** the first coating is produced as a line screen.

36. The method according to at least one of claims 32 to 35, **characterized in that** the embossed structure and the second coating are produced by ink-carrying intaglio printing.

37. The method according to claim 36, **characterized in that** the second coating is executed as a color split.

38. The method according to at least one of claims 32 to 37, **characterized in that** the first coating is applied first, and in a second step the embossed structure and the second coating are transferred simultaneously.

## Revendications

1. Support de données (1) avec une structure optiquement variable (2) qui comporte une structure gaufrée (5) présentant des zones en relief et un premier revêtement (4) contrastant avec la surface du support de données (1) et prévu uniquement sur certaines zones, la structure gaufrée (5) et le revêtement étant combinés de telle manière que, lors d'une observation perpendiculaire, au moins certaines parties du revêtement sont entièrement visibles, mais qu'elles sont cachées lors d'une observation en biais, de telle sorte qu'un effet de basculement est généré quand on alterne l'observation perpendiculaire et l'observation en biais, et la structure optiquement variable comportant au moins dans des zones partielles un deuxième revêtement (6) agencé de telle manière qu'il chevauche au moins dans des zones partielles le premier revêtement, **caractérisé en ce que** le deuxième revêtement est également contrastant avec la surface du support de données et **en ce qu'**au moins un des revêtements consiste au moins partiellement en des encres lasurantes.

2. Support de données selon la revendication 1, **caractérisé en ce que** le deuxième revêtement est agencé de telle manière que sa surface est congruente avec au moins des parties des zones en relief de la structure gaufrée.

3. Support de données selon la revendication 2, **caractérisé en ce que** le support de données comporte un motif imprimé en creux par gravure.

4. Support de données selon la revendication 3, **caractérisé en ce qu'**au moins des parties de la structure gaufrée sont agencées dans la zone du motif imprimé en creux par gravure.

5. Support de données selon la revendication 3 ou 4, **caractérisé en ce que** le deuxième revêtement présente la même couleur que le motif imprimé en creux par gravure.

6. Support de données selon une des revendications de 3 à 5, **caractérisé en ce que** le deuxième revêtement est une partie du motif imprimé en creux par gravure.

7. Support de données selon au moins une des revendications de 1 à 6, **caractérisé en ce que** le deuxième revêtement présente une couleur contrastant avec le premier revêtement.

8. Support de données selon au moins une des revendications de 1 à 7, **caractérisé en ce que** la couleur utilisée pour le premier revêtement présente un contraste complémentaire à la couleur du deuxième revêtement.

9. Support de données selon au moins une des revendications de 1 à 8, **caractérisé en ce que** la structure optiquement variable comporte une couche de fond métallique.

10. Support de données selon au moins une des revendications de 1 à 9, **caractérisé en ce que** le premier et/ou le deuxième revêtement présente au moins sur certaines zones des propriétés lisibles par machine.

11. Support de données selon la revendication 10, **caractérisé en ce que** le premier et/ou le deuxième revêtement présente des propriétés magnétiques, électroconductrices ou luminescentes.

12. Support de données selon au moins une des revendications de 1 à 11, **caractérisé en ce qu'**une couche supplémentaire transparente optiquement variable ou un élément de feuille se superpose à la structure optiquement variable ou est agencé(e) en dessous de cette dernière.

13. Support de données selon au moins une des revendications de 1 à 12, **caractérisé en ce qu'**un des revêtements est réalisé sous forme multicolore.

14. Support de données selon au moins une des revendications de 1 à 13, **caractérisé en ce que** le premier revêtement est une structure tramée imprimée.

15. Support de données selon la revendication 14, **caractérisé en ce que** la structure tramée est une trame lignée dont le pas de trame est constant.

16. Support de données selon la revendication 15, **caractérisé en ce que** la trame lignée consiste en des lignes colorées espacées les unes des autres ou en des lignes colorées directement contiguës les unes aux autres.

17. Support de données selon la revendication 15 ou 16, **caractérisé en ce que** la trame lignée présente des renflements au moins sur certaines zones.

18. Support de données selon la revendication 17, **caractérisé en ce que** la trame lignée ne présente les renflements que d'un côté.

19. Support de données selon la revendication 17 ou 18, **caractérisé en ce que** la trame lignée représente une image en demi-teinte.

20. Support de données selon au moins une des revendications de 1 à 19, **caractérisé en ce que** la structure gaufrée est une structure tramée gaufrée.

21. Support de données selon au moins une des revendications de 1 à 20, **caractérisé en ce que** la structure gaufrée est réalisée sous forme de trame lignée dont le pas de trame est constant.

22. Support de données selon au moins une des revendications de 1 à 20, **caractérisé en ce que** la structure gaufrée présente un pas de trame qui varie sur certaines zones.

23. Support de données selon au moins une des revendications de 1 à 22, **caractérisé en ce que** la structure gaufrée et le deuxième revêtement sont réalisés sous forme d'impression en creux par gravure colorée.

24. Support de données selon au moins une des revendications de 1 à 23, **caractérisé en ce que** le premier revêtement est un trame lignée foncée et **en ce que** le deuxième revêtement se présente sous forme d'une trame lignée claire colorée.

25. Support de données selon au moins une des revendications de 1 à 24, **caractérisé en ce que** la structure gaufrée présente des zones en relief de différentes épaisseurs.

26. Support de données selon au moins une des revendications de 1 à 25, **caractérisé en ce que** la structure gaufrée et le premier revêtement présentent le même pas de trame.

27. Support de données selon au moins une des revendications de 1 à 26, **caractérisé en ce que** la structure gaufrée est subdivisée en zones partielles dans lesquelles sont prévues différentes structures gaufrées partielles.

28. Support de données selon la revendication 27, **caractérisé en ce que** les zones partielles constituent une matrice bidimensionnelle qui comporte m zones partielles dans le sens horizontal et n zones partielles dans le sens vertical avec m,n ≥ 1, de préférence ici m,n ≥ 2.

29. Support de données selon la revendication 27 ou 28, **caractérisé en ce que**, dans au moins deux zones partielles contiguës, les structures gaufrées partielles sont agencées de manière décalée d'une fraction, notamment d'un tiers du pas de la trame.

30. Support de données selon au moins une des revendications de 27 à 29, **caractérisé en ce qu'**au moins les structures gaufrées partielles d'une zone partielle présentent un contour marginal non gaufré.

31. Support de données selon au moins une des revendications de 1 à 30, **caractérisé en ce que** le support de données est un papier-valeur, notamment un billet de banque.

32. Procédé de fabrication d'un support de données (1) avec une structure optiquement variable (2) qui comporte une structure gaufrée (5) présentant des zones en relief et un premier revêtement (4) contrastant avec la surface du support de données et appliqué sur le support de données uniquement sur certaines zones, la structure gaufrée (5) et le revêtement étant combinés de telle manière que, lors d'une observation perpendiculaire, au moins certaines parties du revêtement sont entièrement visibles, mais qu'elles sont cachées lors d'une observation en biais, de telle sorte qu'un effet de basculement est généré quand on alterne l'observation perpendiculaire et l'observation en biais, comprenant les étapes suivantes :
- application du premier revêtement sur le support de données seulement sur certaines zones,
- gaufrage de la structure gaufrée dans le support de données au moyen d'un outil d'estampage, **caractérisé en ce que**, par le gaufrage, un deuxième revêtement (6) est transposé sur le support de données de telle manière que le deuxième revêtement chevauche le premier revêtement au moins dans des zones partielles,
une couleur contrastant également avec la surface du support de données étant choisie pour le deuxième revêtement, **en ce que** la transposition du deuxième revêtement sur le support de données a lieu de manière congruente avec au moins des parties des zones en relief de la structure gaufrée, et **en ce qu'**au moins un des revêtements consiste au moins partiellement en des encres lasurantes.

33. Procédé selon la revendication 32, **caractérisé en ce que** le support de données est pourvu d'un motif imprimé en creux par gravure et **en ce qu'**au moins des parties de la structure gaufrée sont agencées dans la zone du motif imprimé en creux par gravure.

34. Procédé selon la revendication 32 ou 33, **caractérisé en ce que** le premier revêtement est réalisé par procédé offset.

35. Procédé selon au moins une des revendications de 32 à 34, **caractérisé en ce que** le premier revêtement est réalisé sous forme de trame lignée.

36. Procédé selon au moins une des revendications de 32 à 35, **caractérisé en ce que** la structure gaufrée et le deuxième revêtement sont réalisés par procédé d'impression en creux par gravure avec apport d'encre.

37. Procédé selon la revendication 36, **caractérisé en ce que** le deuxième revêtement est réalisé en tranche peinte.

38. Procédé selon au moins une des revendications de 32 à 37, **caractérisé en ce que** le premier revêtement est tout d'abord appliqué, et que la structure gaufrée et le deuxième revêtement sont transposés en même temps lors d'une deuxième étape.
